# EUROPÄISCHE PATENTSCHRIFT

(11) **EP 0 363 641 B1**
(45) Veröffentlichungstag und Bekanntmachung des Hinweises auf die Patenterteilung: **02.06.1993**
(21) Anmeldenummer: 89116462.6
(22) Anmeldetag: 06.09.1989
(51) Int. Cl.: B60J 7/04

(54) **Verfahren und Vorrichtung zur Montage eines ausstellbaren Deckels an einem Fahrzeugdach**
Process and device for mounting a swing-out cover on a vehicle roof
Procédé et dispositif pour le montage d'un panneau ouvrant dans un toit de véhicule

(30) Priorität: 14.10.1988 DE 3835122
(43) Veröffentlichungstag der Anmeldung: 18.04.1990
(73) Patentinhaber: Bayerische Motoren Werke Aktiengesellschaft, 80788 München (DE)
(72) Erfinder: Clausen-Schaumann, Andreas, D-8139 Bernried (DE)

(56) Entgegenhaltungen:
- DE-A- 3 640 168
- US-A- 433 680
- US-A- 4 229 037

## Beschreibung

Die Erfindung betrifft ein Verfahren zur Montage eines ausstellbaren Deckels an einem Fahrzeugdach, mit den im Oberbegriff des Patentanspruchs 1 angegebenen Merkmalen, sowie eine Vorrichtung zur Durchführung des Verfahrens.

Ein derartiges Verfahren wird bereits bei der Montage der ausstellbaren Deckel von Schiebehebedächern an Kraftfahrzeugen angewendet. In einem ersten Verfahrensschritt wird eine Ausstelleinrichtung für den Deckel an der Unterseite des Fahrzeugdaches befestigt. Danach wird der vordere Bereich des Deckels durch eine Dachöffnung hindurch mit einer Querachse verbunden, die an seitlich gegenüberliegenden, in Dachlängsführungen verstellbaren Gleitsteinen ausgebildet ist. Anschließend wird der Deckel in eine die Dachöffnung verschließende Stellung eingeschwenkt. In dieser Stellung ist der Deckel gegenüber der Dachaußenfläche etwas abgesenkt. Um den Deckel in einer mit der Dachkontur bündigen Schließstellung mit einer höhenverstellbaren Querstrebe der Ausstelleinrichtung verbinden zu können, ist der Deckel in eine entsprechende Stellung anzuheben. Das genaue Einstellen des Deckels auf eine mit der Dachkontur bündige Schließstellung bereitet Schwierigkeiten, da der Deckel von innen auf die richtige Höhenlage einzustellen und an der Querstrebe zu befestigen ist und außerdem die Höhenlage des Deckels an der Oberseite des Fahrzeugdaches zu kontrollieren ist. Das Einstellen der Höhenlage des Deckels auf eine mit der Dachkontur bündige Schließstellung erfordert deshalb oft ein mehrmaliges Abgleichen, das zeitaufwendig und unsicher ist.

Der Erfindung liegt die Aufgabe zugrunde, ein Verfahren nach dem Oberbegriff des Patentanspruchs 1 anzugeben, das eine einfache und schnelle Einstellung des Deckels auf eine in Schließstellung vorgesehene Höhenlage ermöglicht.

Diese Aufgabe ist durch die im Kennzeichen des Patentanspruchs 1 angegebenen Merkmale gelöst. Besonders vorteilhaft ist, daß der Deckel nach der Befestigung der Ausstelleinrichtung lediglich bis zu dem Anschlag der Vorrichtung einzuschwenken ist, damit sich der hintere Bereich des Deckels in einer beispielsweise mit der Dachkontur bündigen Höhenlage befindet, in der der Deckel mit der Querstrebe verbindbar ist. Da sich der Deckel vorne an der Querachse und hinten an dem Anschlag abstützt, erfolgt die Befestigung des Deckels an der Querstrebe frei von der Last des Deckels. Die vordere Querachse des Deckels läßt sich ohne weiteres in der Höhe so anordnen, daß sich in Schließstellung des Deckels auch der vordere Deckelbereich in einer mit der Dachkontur bündigen Höhenlage befindet. Ist zwischen dem vorderen Rand der Dachöffnung und dem Deckel ein ausstellbarer Windabweiser angeordnet, so kann dieser die durch Fertigungstoleranzen bedingten Höhenabweichungen der Querachse ausgleichen.

Eine weitere Aufgabe der Erfindung ist, eine Vorrichtung zur Durchführung des Verfahrens nach Patentanspruch 1 anzugeben, die ohne Beschädigung von Teilen an dem Deckel oder an der Fahrzeugkarosserie angebracht und nach der Montage des Deckels leicht entfernt werden kann.

Diese weitere Aufgabe ist durch die im Kennzeichen des Patentanspruches 2 sowie durch die im Kennzeichen des Patentanspruches 3 angegebenen Merkmale gelöst. Der Magnet- oder Klebestreifen ist lediglich nach hinten vorstehend auf den hinteren oberen Rand des Deckels aufzulegen und eventuell anzudrücken, damit er durch Magnet- oder Klebekraft an der Oberseite des Deckels befestigt ist. Der nach hinten vorstehende Bereich des Magnet- oder Klebestreifens bildet einen Anschlag, der nach dem Einschwenken des Deckels hinter der Dachöffnung an der Dachoberseite anliegt und die Schließstellung des Deckels festlegt. Da der Magnet- oder Klebestreifen in der Schließstellung einerseits an der Oberseite des Deckels und andererseits an der Oberseite des Fahrzeugdaches anliegt, ist der hintere Bereich des Deckels zwangsläufig bündig mit der Dachkontur. Ein Verkratzen der Oberfläche des beispielsweise lackierten Deckels kann dadurch vermieden werden, daß der Magnetstreifen mit einem weichen Werkstoff ummantelt bzw. der Klebestreifen biegeweich ausgebildet ist. Die anstelle des Magnet- oder Klebestreifens verwendbare Leiste ist lediglich hinter der Dachöffnung in Querrichtung so auf das Fahrzeugdach aufzusetzen, daß der von der Leiste durch die Dachöffnung nach unten abstehende Wandabschnitt am hinteren Rand der Dachöffnung anliegt. Wird der im vorderen Bereich an der Querachse schwenkbar befestigte Deckel bis zum Anliegen an dem im unteren Bereich des Wandabschnittes der Leiste ausgebildeten Anschlag eingeschwenkt, so befindet sich der Deckel in einer beispielsweise mit der Dachkontur bündigen Schließstellung, in der er frei von der Last des Deckels mit der Querstrebe verbindbar ist. Bei ausgestelltem Deckel läßt sich die Leiste von dem Fahrzeugdach leicht abnehmen.

Vorteilhafte Ausgestaltungen der Erfindung sind Gegenstand weiterer Patentansprüche.

Zwei Ausführungsbeispiele der Erfindung werden anhand einer Zeichnung näher erläutert. Es zeigen
- Fig. 1: ein erstes Ausführungsbeispiel in einem Längsschnitt durch den hinteren Bereich des Deckels,
- Fig. 2: eine Fig. 1 entsprechende Ansicht eines zweiten Ausführungsbeispiels mit einer anderen Montagevorrichtung,
- Fig. 3: einen Längsschnitt durch eine im hinteren Deckelbereich vorgesehene Keilverbindung zur Befestigung des Deckels von Fig. 1 oder Fig. 2 an der Querstrebe,
- Fig. 4: den Keil gemäß Fig. 3 in einer Ansicht von unten,
- Fig. 5: eine Fig. 3 entsprechende Ansicht von dem auf andere Weise mit der Querstrebe verbundenen Deckel und
- Fig. 6: eine Fig. 5 entsprechende Ansicht mit einer anderen Schraubbefestigung des Deckels an der Querstrebe.

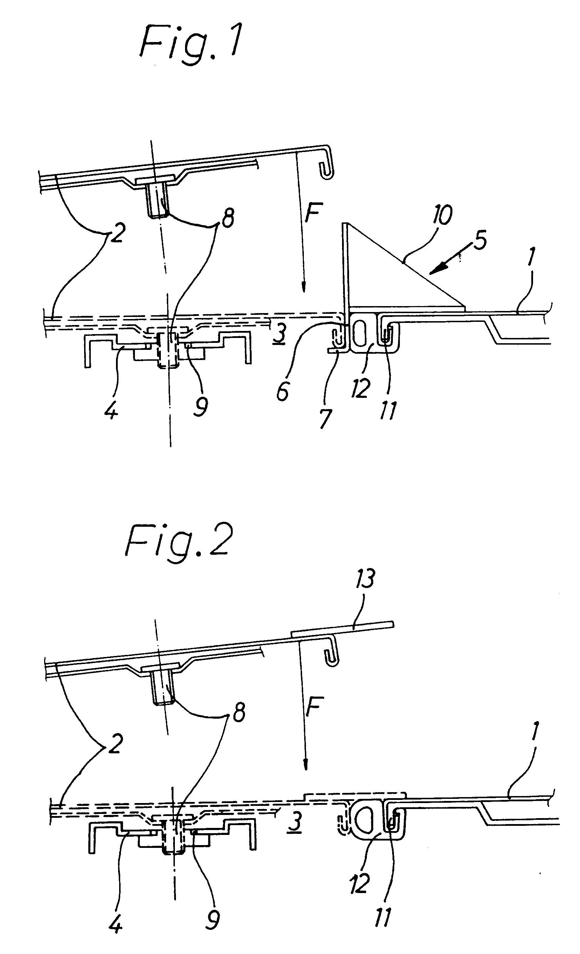

Ein in einem ersten Ausführungsbeispiel als Schiebehebedach ausgebildetes Fahrzeugdach 1 weist gemäß Fig. 1 einen Deckel 2 auf, der nach der Befestigung einer nicht dargestellten Dachkassette im unteren Bereich einer Dachöffnung 3 montiert wird. Die nicht dargestellte Dachkassette weist seitlich gegenüberliegende Dachlängsführungen auf, in denen im Ausführungsbeispiel je ein Gleitkörper längsverlagerbar angeordnet ist. An der Dachkassette ist eine Ausstelleinrichtung für den Deckel 2 angeordnet, die eine höhenverstellbare Querstrebe 4 aufweist. Die Querstrebe 4 kann beispielsweise über seitlich schwenkbar angelenkte Ausstellhebel höhenverstellbar sein, die jeweils an einem Ende um eine Querachse schwenkbar mit einem Schlitten verbunden sind, der in einer Dachlängsführung verlagerbar ist. Ebenso kann die Querstrebe aber auch auf andere Weise höhenverstellbar sein. Zur Montage des fertig lackierten und vormontierten Deckels 2 ist der vordere Bereich des nach vorne unten geneigten Deckels 2 durch die Dachöffnung 3 von oben hindurch mit einer nicht dargestellten Querachse zu verbinden. Bei dem Ausführungsbeispiel ist die Querachse durch Bolzen gebildet, die jeweils zwischen den vorderen Enden von zwei Schenkeln quer verlaufen, die von einem in einer Dachlängsführung verlagerbaren Gleitkörper nach vorne abstehen. Bei dem Ausführungsbeispiel sind vom vorderen Bereich des Deckels 2 nach vorne abstehende Arme vorgesehen, die jeweils eine Nase aufweisen. Zur schwenkbaren Befestigung des Deckels 2 ist dieser lediglich mit seinen Armen unter einem Winkel des Deckels, der größer als der maximale Ausstellwinkel des Deckels 2 nach seiner Montage ist, an die Querachse anzunähern und anschließend in Pfeilrichtung F nach unten zu schwenken. Ist der Deckel 2 um die Querachse in den Ausstellbereich des montierten Deckels 2 eingeschwenkt, hintergreifen die an den Armen ausgebildeten Nasen entweder die Bolzen oder an den Gleitkörpern ausgebildete Stützschultern, so daß der Deckel 2 in seinem von Elementen der Ausstelleinrichtung bestimmten Ausstellbereich fest mit der Querachse verbunden ist. Eine schwenkbare Verbindung des vorderen Deckelbereiches mit der Querachse könnte auch durch seitlich von dem vorderen Deckelbereich abstehende Zapfen erfolgen, die in dachseitige oder an den Gleitkörpern ausgebildete Kulissen eingreifen. Ebenso ist es auch möglich, daß der vordere Deckelbereich über Schraubverbindungen oder andere Verbindungsmittel an der Querachse schwenkbar zu befestigen ist. Um den Deckel 2 bei der Montage in einer mit der Kontur des Fahrzeugdaches 1 bündigen Schließstellung rasch mit der Querstrebe 4 verbinden zu können, wird vor dem Einschwenken in Pfeilrichtung F des Deckels 2 auf den hinter der Dachöffnung 3 angrenzenden Randbereich des Fahrzeugdaches 1 eine in Querrichtung verlaufende Leiste 5 aufgelegt. Die Leiste 5 weist an ihrem vorderen Bereich einen durch die Dachöffnung 3 nach unten gerichteten Wandabschnitt 6 auf, der am hinteren Rand der Dachöffnung 3 angrenzt und mit einem am unteren Ende nach vorne gerichteten Vorsprung einen Anschlag 7 bildet. Beim Einschwenken des Deckels 2 bis zum Anliegen eines unteren Wandbereiches des Deckels 2 an dem Anschlag 7 in die durch unterbrochene Linien dargestellte Schließstellung wird der Deckel 2 in Längs- und Querrichtung an der Dachöffnung 3 zentriert. Dabei führen die Gleitkörper, an denen die Querachse ausgebildet ist, entsprechende Längsbewegungen aus. Der Deckel 2 kann sich in Querrichtung auf die Dachöffnung 3 einstellen, da er an der Querachse in einem Einstellbereich quer verschiebbar befestigt ist. Der Vorsprung 7 ist so an dem Wandabschnitt 6 ausgebildet, daß sich der Deckel 2 in der durch unterbrochene Linien dargestellten Schließstellung in einer mit der Kontur des Fahrzeugdaches 1 bündigen Lage befindet, in der der Deckel 2 mit der Querstrebe 4 verbindbar ist. Hierzu ist bei dem Ausführungsbeispiel je ein seitlich von der Unterseite des Deckels 2 nach unten abstehender Gewindebolzen 8 vorgesehen, der eine Durchgangsöffnung 9 in der Querstrebe 4 durchdringt. Die im Ausführungsbeispiel zylindrische Durchgangsöffnung 9 weist einen zum Gewindebolzen 8 größeren Durchmesser auf, der so bemessen ist, daß sich der Deckel 2 bei festgehaltener Querstrebe 4 in Längs- und Querrichtung an der Dachöffnung 3 zentrieren kann. Bei der beschriebenen Ausführung ist der Wandabschnitt 6 der Leiste 5 nach oben verlängert und über eine schräge Stützwand 10 abgestützt. Der verlängerte Wandabschnitt 6 bildet eine Zentrierfläche, die beim Einschwenken des Deckels 2 mit dem hinteren Deckelrand zusammenwirkt. An dem Rand 11 der Dachöffnung 3 ist umlaufend eine Dichtung 12 befestigt, die bei dem Ausführungsbeispiel als Schlauchdichtung ausgebildet ist. Zwischen dem vorderen Rand der Dachöffnung 3 und dem Deckel 2 ist ein nicht dargestellter Windabweiser angeordnet, der in Schließstellung des Deckels 2 eingeschwenkt und elastisch verformt ist. Wird der Deckel 2 aus seiner Schließstellung abgesenkt und zurückverlagert, so stellt sich der Windabweiser unter seiner elastischen Kraft selbsttätig aus. Der Wandabschnitt 6 der Leiste 5 stützt sich bei dem Ausführungsbeispiel über nicht dargestellte Stege so an der Dichtung 12 gegen die nach hinten gerichtete elastische Kraft des Windabweisers ab, daß der in Schließstellung mit der Querstrebe 4 verbundene Deckel 2 nach dem Entfernen der Leiste 5 den hinten quer verlaufenden Abschnitt der Dichtung 12 nicht oder nur geringfügig zusammendrückt. Die Leiste 5 kann ohne weiteres von dem Fahrzeugdach 1 abgenommen werden, wenn der montierte Deckel 2 ausgestellt ist. Bei dem Ausführungsbeispiel erstreckt sich die Leiste 5 über die gesamte Breite der Dachöffnung 3.

Ein zweites, in Fig. 2 dargestelltes Ausführungsbeispiel weist ebenfalls ein als Schiebehebedach ausgebildetes Fahrzeugdach 1 mit einem Deckel 2 auf, der nach seiner Montage in Schließstellung eine Dachöffnung 3 verschließt. Wie im ersten Ausführungsbeispiel wird zunächst an der Unterseite des Fahrzeugdaches 1 eine Ausstelleinrichtung für den Deckel 2 montiert, die eine höhenverstellbare Querstrebe 4 aufweist. In gleicher Weise wie beim ersten Ausführungsbeispiel wird der vordere Bereich des lackierten und vormontierten Deckels 2 an einer Querachse schwenkbar befestigt. Zur Vermeidung von Wiederholungen sind mit den ersten Ausführungsbeispielen übereinstimmende Bauteile mit gleichen Bezugszahlen versehen. Anstelle einer Leiste weist das zweite Ausführungsbeispiel eine durch einen Magnet- oder Klebestreifen 13 gebildete Vorrichtung zur Erleichterung der Deckelmontage auf. Vor dem Einschwenken des Deckels 2 in Pfeilrichtung F ist an der Oberseite des hinteren Deckelbereiches der Magnet- oder Klebestreifen 13 wie dargestellt nach hinten vorstehend anzubringen, der durch Magnet- oder Klebekraft an dem Deckel 2 festgehalten ist. Bei diesem Ausführungsbeispiel bildet der nach hinten vorstehende Bereich des Magnet- oder Klebestreifens 13 einen Anschlag, der nach dem Einschwenken des Deckels 2 in Pfeilrichtung F an der Oberseite des Fahrzeugdaches 1 anliegt und die durch unterbrochene Linien dargestellte Schließstellung des Deckels 2 festlegt. In dieser mit der Dachkontur bündigen Schließstellung ist der Deckel 2 über Gewindebolzen 8 mit der Querstrebe 4 der Ausstelleinrichtung zu verbinden. Der Magnet- oder Klebestreifen 13 kann nach der Deckelmontage beispielsweise bei ausgestelltem Deckel 2 abgenommen werden. Der Klebestreifen 13 ist bei dem Ausführungsbeispiels biegeweich ausgebildet. Die Klebeschicht des Klebestreifens 13 hinterläßt nach dem Entfernen des Klebestreifens 13 keine Rückstände auf dem Deckel 2 oder der Fahrzeugkaraosserie 1. Bei Verwendung eines Magnetstreifens kann dieser von einem weichen Werkstoff ummantelt sein. Der Magnet- oder Klebestreifen 13 erstreckt sich bei dem Ausführungsbeispiel über die gesamte Breite der Dachöffnung 3.

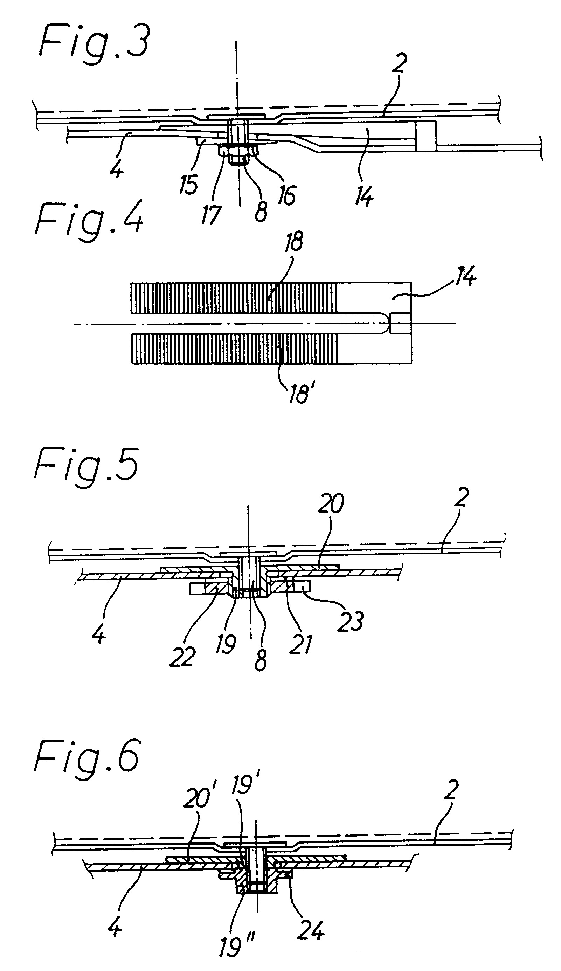

Zur Befestigung des Deckels 2 von Fig. 1 oder von Fig. 2 an der Querstrebe 4 der Ausstelleinrichtung ist in Fig. 3 eine Keilverbindung vorgesehen. Diese besteht aus einem U-förmigen Keil 14, der mit seinen den Gewindebolzen 8 einschließenden Schenkeln seitlich soweit eingeschoben wird, daß er den entsprechend keilförmig ausgebildeten Zwischenraum zwischen dem Deckel 2 und der Querstrebe 4 ausfüllt. Bei dem Ausführungsbeispiel wird auf den Gewindebolzen 8 von unten eine zum Keil 14 gegensinnig keilförmige Keilscheibe 15 und eine Beilagscheibe 16 aufgesteckt und mit einer zur Verdrehsicherung mit einer Klemmbuchse versehenen Gewindemutter 17 verschraubt. Eine zum Durchtritt des Gewindebolzens 8 in der Keilscheibe 15 zentrisch ausgebildete Öffnung ist im Durchmesser nur geringfügig größer als der Gewindebolzen 8 ausgebildet, so daß sich die Keilscheibe 15 unter der Spannkraft der Gewindemutter 17 nicht seitlich wegverlagern kann.

Der Keil 14 der Keilverbindung gemäß Fig. 3 ist in Fig. 4 von unten dargestellt. Wie man erkennt, weist die der Querstrebe zugewandte Fläche des Keiles 14 quer zu den Schenkeln 18, 18′ des Keiles 14 verlaufende Zähne auf, die sich in die Oberfläche der Querstrebe eindrücken und dadurch eine unbeabsichtigte seitliche Verlagerung des Keiles 14 verhindern.

In Fig. 5 ist eine alternative Verbindung des Deckels 2 mit der Querstrebe 4 dargestellt. Die als Doppelverschraubung ausgebildete Verbindung weist eine auf dem Gewindebolzen 8 aufgeschraubte Gewindebuchse 19 auf, die in Schließstellung des Deckels 2 auf dem Gewindebolzen 8 solange verdreht und damit axial verstellt wird, bis ein radial vorstehender Bund 20 der Gewindebuchse 19 von oben an der Querstrebe 4 anliegt. Anschließend wird von unten eine Sicherungsscheibe 21 auf die nach unten vorstehende Gewindebuchse 19 aufgesteckt und eine Nutmutter 22 auf ein Außengewinde der Gewindebuchse 19 aufgeschraubt. Zur Verdrehsicherung der Nutmutter 22 werden radial abstehende Nasen der Sicherungsscheibe 21 in radiale Nuten der Nutmutter 22 verlagert.

Eine weitere alternativ verwendbare Verbindung des Deckels 2 mit der Querstrebe 4 ist in Fig. 6 abgebildet, die ähnlich wie die Doppelverschraubung nach Fig. 5 gebildet ist. Eine auf den Gewindebolzen 8 aufgeschraubte Gewindebuchse 19′ wird in Schließstellung des Deckels 2 solange gedreht, bis ein radialer Bund 20′ der Gewindebuchse 19′ von oben an der Querstrebe 4 anliegt. Bei dieser Verbindung wird eine mit einem radialen Kragen 24 versehene Gewindebuchse 19˝ auf den Gewindebolzen 8 von unten aufgeschraubt und in nicht dargestellter Weise gegen Verdrehung gesichert.

Die beiden Ausführungsbeispiele wurden bei einem als Schiebehebedach ausgebildeten Fahrzeugdach erläutert. Ebenso ist die Erfindung auch zur Montage von ausstellbaren Deckeln eines als Hebedach ausgebildeten Fahrzeugdaches anwendbar. Anstelle einer Dachkassette könnte auch ein Rahmen o.dgl. vorgesehen sein, der die Ausstelleinrichtung des Deckels aufnimmt. Eine Befestigung des Deckels an der Querstrebe könnte auch anders als in den Fig. 3, 5 und 6 angegeben erfolgen.

## Patentansprüche

1. Verfahren zur Montage eines ausstellbaren Deckels (2) an einem Fahrzeugdach (1), bei dem nach der Befestigung einer Ausstelleinrichtung des Deckels (2) an der Unterseite des Fahrzeugdaches (1) das vordere Deckelende von oben durch eine Dachöffnung (3) hindurch an einem Stützkörper der Ausstelleinrichtung um eine Querachse schwenkbar befestigt und anschließend der Deckel (2) um die Querachse in eine die Dachöffnung (3) verschließende Schließstellung eingeschwenkt wird, in der der Deckel (2) mit einer höhenverstellbaren Querstrebe (4) der Ausstelleinrichtung zu verbinden ist, dadurch gekennzeichnet, daß vor dem Einschwenken des Deckels (2) in seine Schließstellung im hinteren Bereich der Dachöffnung (3) eine Vorrichtung (Magnet- oder Klebestreifen 13, Leiste 5) an dem Deckel (2) oder an der Fahrzeugkarosserie (1) angebracht wird, die einen Anschlag (7) aufweist, der in Schließstellung das Einschwenken des Deckels (2) begrenzt.

2. Vorrichtung zur Durchführung des Verfahrens nach Anspruch 1, dadurch gekennzeichnet, daß die Vorrichtung durch einen Magnet- oder Klebestreifen (13) gebildet ist, der an der Oberseite des hinteren Deckelbereiches nach hinten vorstehend angebracht und durch Klebe- oder Magnetkraft festgehalten ist, wobei der nach hinten vorstehende Bereich des Magnet- oder Klebestreifens (13) einen Anschlag bildet, der sich in Schließstellung des Deckels (2) an der Oberseite des Fahrzeugdaches (1) abstützt.

3. Vorrichtung zur Durchführung des Verfahrens nach Anspruch 1, dadurch gekennzeichnet, daß die Vorrichtung durch eine Leiste (5) gebildet ist, die hinter der Dachöffnung (3) auf der Oberseite des Fahrzeugdaches (1) aufliegt und einen am hinteren Rand der Dachöffnung (3) anliegenden, nach unten gerichteten Wandabschnitt (6) aufweist, der mit einem am unteren Ende nach vorne gerichteten Vorsprung einen Anschlag (7) bildet, an dem der Deckel (2) in Schließstellung anliegt.

4. Vorrichtung nach Anspruch 3, dadurch gekennzeichnet, daß der Wandabschnitt (6) nach oben verlängert ist und eine mit dem hinteren Deckelrand zusammenwirkende Zentrierfläche bildet.

5. Vorrichtung nach Anspruch 4, mit einem als Schiebehebedach ausgebildeten Fahrzeugdach, das eine am Rand der Dachöffnung befestigte Dichtung und einen zwischen dem vorderen Rand der Dachöffnung und dem Deckel angeordneten Windabweiser aufweist, der in Schließstellung des Deckels gegen die Kraft eines Federelements eingeschwenkt ist, die den Deckel nach hinten belastet, dadurch gekennzeichnet, daß sich der Wandabschnitt (6) so am hinteren Rand der Dachöffnung (3) und/oder an der Dichtung (12) gegen die Kraft des Federelements abstützt, daß der in Schließstellung mit der Querstrebe (4) verbundene Deckel (2) nach dem Entfernen der Leiste (5) den hinten quer verlaufenden Abschnitt der Dichtung (12) nicht oder nur gering zusammendrückt.

6. Vorrichtung nach Anspruch 2 oder 3, dadurch gekennzeichnet, daß sich der Magnet- oder Klebestreifen (13) oder die Leiste (5) in Querrichtung etwa über die Breite der Dachöffnung (3) erstreckt.

## Claims

1. A method for mounting a swing-out cover (2) on a vehicle roof (1), in which, after the attachment of a swing-out arrangement for the cover (2) on the underside of the vehicle roof (1), the front end of the cover is attached from above through a roof opening (3) so as to be orientable about a transverse axis on a support member of the swing-out arrangement and then the cover (2) is swung in about the transverse axis into a closed position to close the roof opening (3), wherein the cover (2) is to be connected with a vertically-adjustable transverse member (4) of the swing-out arrangement, characterised in that, before the cover (2) is swung in into its closed position in the rear region of the roof opening (3), a device (magnetic or adhesive strip 13, fillet 5) is arranged on the cover (2) or on the body (1) of the vehicle, which device has a stop (7) which, in the closed position, limits the swinging-in of the cover (2).

2. Apparatus for carrying out the method according to Claim 1, characterised in that it comprises a magnetic or adhesive strip (13) which is arranged to project towards the rear on the upper side of the rear cover region and which is secured by adhesive or magnetic force, wherein the rearwardly-projecting region of the magnetic or adhesive strip (13) forms a stop which, in the closed position of the cover (2), rests on the upper side of the vehicle roof (1).

3. Apparatus for carrying out the method according to Claim 1, characterised in that it comprises a fillet (5) which rests behind the roof opening (3) on the upper side of the vehicle roof (1) and has a downwardly-directed wall section (6) lying against the rear edge of the roof opening (3), which wall section forms, with a projection directed towards the front at the lower end, a stop (7) against which the cover (2) rests in its closed position.

4. Apparatus according to Claim 3, characterised in that the wall section (6) is extended upwards and forms a centering face co-operating with the rear edge of the cover.

5. Apparatus according to Claim 4 comprising a vehicle roof constructed as a sliding lifting roof which has a seal attached to the edge of the roof opening and a wind deflector arranged between the front edge of the roof opening and the cover, which wind deflector, in the closed position of the cover, is swung in against the force of a spring element which loads the cover toward the rear, characterised in that the wall section (6) rests on the rear edge of the roof opening (3) and/or on the seal (12) against the force of the spring element such that the cover (2), which is connected with the transverse member (4) in its closed position, does not compress, or only slightly compresses, the section of the seal (12) extending transversely to the rear after the fillet (5) is removed.

6. Apparatus according to Claim 2 or 3, characterised in that the magnetic or adhesive strip (13) or the fillet (5) extends in a transverse direction approximately over the width of the roof opening (3).

## Revendications

1. Procédé de montage d'un panneau ouvrant (2) su un toit de véhicule (1), dans lequel après fixation d'un dispositif d'ouverture du panneau (2) sur la face inférieure du toit du véhicule (1), l'extrémité avant du panneau pour pouvoir pivoter autour d'un axe transversal est fixée d'en haut à travers une ouverture du toit (3) sur une pièce d'appui du mécanisme d'ouverture et ensuite le panneau (2) est amené à pivoter autour de l'axe transversal dans une position de fermeture bouchant l'ouverture du toit (3), position dans laquelle le panneau (2) doit être relié à une entretoise (4) réglable en hauteur du dispositif d'ouverture,
procédé caractérisé
- en ce qu'avant de faire pivoter le panneau dans sa position de fermeture dans la zone arrière de l'ouverture du toit (3) on applique sur le panneau (2) ou sur la carrosserie du véhicule un dispositif (piste magnétique ou bande adhésive 13, listeau 5), qui a une butée (7) limitant en position de fermeture le pivotement du panneau (2).

2. Dispositif pour la réalisation du procédé selon la revendication 1,
caractérisé
- en ce que le dispositif est constitué par une piste magnétique ou une bande adhésive (13), qui est appliquée sur la face supérieure de la zone arrière du panneau (2) et dépasse vers l'arrière et est maintenue par une force de collage ou magnétique, la zone proéminente vers l'arrière de la piste magnétique ou bande adhésive (13) formant une butée, qui vient s'appuyer en position de fermeture du panneau (2) sur la face supérieure du toit du véhicule.

3. Dispositif pour la réalisation du procédé selon la revendication 1,
caractérisé en ce que
- le dispositif est formé d'un listeau (5), qui repose sur la face supérieure du toit du véhicule (1) derrière l'ouverture du toit (3) et comporte un tronçon de paroi (6) adhèrent au bord arrière de l'ouverture du toit (3), dirigé vers le bas, qui forme une butée (7) avec une partie en saillie située à son extrémité inférieure et dirigée vers l'avant, sur laquelle adhère le panneau (2) en position de fermeture.

4. Dispositif selon la revendication 3,
caractérisé en ce que
- le tronçon de paroi (6) est prolongé vers le haut et constitue une surface de centrage opérant conjointement avec le bord arrière du panneau.

5. Dispositif selon la revendication 4, réalisé comme toit ouvrant et coulissant, qui comporte une garniture d'étanchéité fixée au bord de l'ouverture du toit et un déflecteur pour le vent disposé entre le bord avant de l'ouverture du toit et le panneau, déflecteur qu'on fait pivoter en position de fermeture du panneau contre la force exercée par un élément de ressort, force qui charge le panneau vers l'arrière,
dispositif caractérisé
- en ce que le tronçon de paroi (6) s'appuie contre le bord arrière de l'ouverture du toit (3) et/ou contre la garniture d'étanchéité (12) à l'encontre de la force de l'élément de ressort, de façon qu'en position de fermeture le panneau (2) lié à l'entretoise (4) ne comprime pas ou seulement eu, après avoir retiré le listeau (5), le tronçon de la garniture d'étanchéité (12) se développant en arrière
transversalement.

6. Dispositif selon la revendication 2 ou 3,
caractérisé
- en ce que la piste magnétique ou bande adhésive (13) ou le listeau (5) s'étendent en direction transversale à peu près sur la largeur de l'ouverture du toit (3).
